# EUROPÄISCHE PATENTSCHRIFT

(11) **EP 2 288 535 B1**
(45) Veröffentlichungstag und Bekanntmachung des Hinweises auf die Patenterteilung: **08.08.2012**
(21) Anmeldenummer: 09768603.4
(22) Anmeldetag: 24.06.2009
(51) Int. Cl.: B62K 19/42, B60C 23/10

(54) **VORRICHTUNG ZUR SPEICHERUNG VON LUFT**
APPARATUS FOR STORING AIR
DISPOSITIF D'ACCUMULATION D'AIR

(30) Priorität: 27.06.2008 AT 10272008
(43) Veröffentlichungstag der Anmeldung: 02.03.2011
(73) Patentinhaber: Haager, Alexander, 2130 Mistelbach (AT)
(72) Erfinder: Haager, Alexander, 2130 Mistelbach (AT)
(74) Vertreter: Cunow, Gerda
(86) Internationale Anmeldenummer: PCT/AT2009/000253
(87) Internationale Veröffentlichungsnummer: WO 2009/155628

(56) Entgegenhaltungen:
- WO-A-95/07207
- DE-C- 670 808
- DE-C- 831 206
- DE-C- 855 965
- DE-C- 874 256
- DE-U- 7 337 703
- FR-A- 606 092

## Beschreibung

Die vorliegende Erfindung bezieht sich auf eine Vorrichtung zum Generieren und/oder zur Speicherung von Druckluft, zum Befüllen von Reifen eines Fahrzeugs, insbesondere Fahrrads wobei die Vorrichtung in einem Element bzw. Rahmenelement des Fahrzeugs aufgenommen ist und Druckluft durch eine Relativbewegung eines Pumpzylinders zu einer an einem Element festgelegten Pumpstange generiert ist.

Vorrichtungen zur Speicherung bzw. zum Erzeugen von Druckluft sind in den verschiedensten Formen seit langer Zeit bekannt. So sind übliche, an Tankstellen erhältliche Druckluftspeichereinrichtungen dafür gedacht, beispielsweise Autoreifen oder Fahrradreifen wenigstens teilweise zu befüllen bzw. den Druck der Fahrrad- bzw. Autoreifen auf ein entsprechendes Niveau entweder durch Zuführen von Druckluft oder Ablassen derselben zu bringen.

Bei Fahrrädern werden üblicherweise Fahrradpumpen herkömmlicher Art entweder mit dem Fahrrad mitgeliefert und an diesem fixiert verkauft oder derartige Einrichtungen, insbesondere mechanische oder mit Gaskartuschen ausgestattete Einrichtungen, sind gesondert mitzuführen und an dem jeweiligen Fahrzeug mehr oder weniger kompliziert zu befestigen und sind überdies lediglich zur Vorort-Erzeugung von Druckluft gedacht und weisen keinerlei Speichermöglichkeit auf.

Aufgrund des Befestigungs- bzw. Halteproblems von derartigen Pumpen an dem Rahmen von Fahrzeugen, insbesondere von Fahrrädern, und aufgrund des Problems, daß an dem Fahrradrahmen üblicherweise nur kleine und leistungsschwache Pumpen befestigt werden können, besteht üblicherweise das Problem, daß bei Luftverlust insbesondere bei Fahrrädern entweder Orte aufgesucht werden müssen, an welchen stationäre Pumpen vorhanden sind, oder aber versucht werden muß, mit schlecht geeigneten bzw. nicht geeigneten Mitteln den Reifen des Fahrrads, Rollers oder sonstigen Fahrzeugs, welches Luftreifen aufweist, wieder aufzupumpen, um mit ausreichendem Reifendruck die Fahrt fortzusetzen.

Aus der EP-B 1 581 423 ist bereits eine wiederbefüllbare Aufpumpvorrichtung, die in einen den Sattel eines Fahrrad stützenden Zylinder integriert ist, bekannt geworden. Bei einer derartigen wiederbefüllbaren Aufpumpvorrichtung ist eine zylindrische Kammer, welche das Gas zum Aufpumpen des Fahrradreifens enthält, in die Abstützvorrichtung für den Sattel integriert, und die Druckvorrichtung ist, um einen Fahrradreifen rasch und zuverlässig aufpumpen zu können, mit Flüssiggas befüllt.

Aus der DE 88 15 229.4 U ist ein Fahrrad mit abkippbarem Sattel bekannt geworden, wobei nach Abkippen des Sattels von dem Fahrradrahmen unter dem Fahrradsattel eine zum Aufpumpen der Räder erforderliche Luftpumpe im Rahmen des Fahrrads integriert ist. Mit einer derartigen Aufpumpvorrichtung soll einerseits sichergestellt werden, daß das Aufpumpen des Fahrrads nicht in gebückter Haltung durchgeführt werden muß und andererseits soll die Fahrradpumpe gegen einen Diebstahl gesichert sein.

Aus der DE-U 73 37 703 ist eine diebstahlsichere Aufbewahrung einer Fahrradluftpumpe in der Sattelstütze eines Fahrrads bekanntgeworden, wobei die Fahrradpumpe in die Sattelstütze eingesetzt ist und zum Aufpumpen eines Fahrrads aus dieser entnommen werden muß.

Aus der DE-PS 831 206 ist eine Sattel-Luftpumpe zum Aufpumpen von Fahrradreifen bekannt geworden, bei welcher ein Rahmenrohr und der darin gleitende Rahmenstutzen eines Fahrrads eine Luftpumpe ausbilden, indem das Rahmenrohr gegenüber einer Bodenplatte luftdicht verschlossen ist und in dem Rahmenrohr eine Austrittsdüse für die Druckluft ausgebildet ist.

Aus der FR-A 606 092 ist eine Fahrradpumpe bekannt geworden, welche ein Teil der Sattelstütze ist und deren Pumpenstange durch in einen Rahmen ausgebildete Verschraubungen an dem Rahmen festgelegt ist sowie das Luftaustrittsventil den Fahrradrahmen durchdringend ausgebildet ist.

Aus der gattungsgemäßen DE-PS 855 965 ist weiters eine in einem Fahrradrahmen angeordnete Luftpumpe mit einer mehrteiligen, teleskopartigen Kolbenstange bekannt geworden, bei welcher die Kolbenstange durch eine Verriegelung an dem Sattelrahmen festgelegt ist und nach Entriegeln von dem Rahmenrohr betätigbar ist.

Die vorliegende Erfindung zielt nun darauf ab, eine Vorrichtung zum Generieren und/oder zur Speicherung von Druckluft zur Verfügung zu stellen, welche die vorgenannten Probleme überwindet und welche insbesondere unverlierbar an bzw. in dem Fahrzeug festgelegt ist, welches die zu befüllenden Reifen aufweist.

Zur Lösung dieser Aufgaben ist die vorliegende Erfindung im wesentlichen durch gekennzeichnet, daß der Pumpzylinder mittels eines Endteils an dem Element, insbesondere mit einem eine Verriegelung aufweisenden Halteteil, lösbar festgelegt ist, daß der Pumpzylinder mit wenigstens einer als Ventil ausgebildeten Abgabeöffnung für Druckluft versehen ist und daß der Pumpzylinder in dem Rahmenteil über ein federbelastetes, Luftdurchtrittsöffnungen aufweisendes Gleitlager geführt ist. Indem die Vorrichtung zum Generieren und/oder zur Speicherung von Druckluft in einem Element, insbesondere Rahmenteil, des Fahrzeugs aufgenommen ist, gelingt es sicherzustellen, daß Druckluft, insbesondere ausreichend Druckluft, für das Anheben des Reifendrucks des Fahrzeugs zu jeder Zeit und insbesondere an jedem Ort zur Verfügung steht und daß darüber hinaus eine Einheit aus der Vorrichtung zum Generieren und/oder zur Speicherung von Druckluft und dem Fahrzeug zur Verfügung gestellt werden kann, so daß nicht nur ein formschönes und ästhetisches Äußeres des Fahrzeugs zur Verfügung gestellt werden kann, sondern gleichzeitig auch an dem Fahrzeug, insbesondere dem Fahrzeugrahmen, verfügbare Hohlräume bzw. Plätze sinnvoll durch die erfindungsgemäße Vorrichtung genutzt werden können.

Weiterhin ist die Vorrichtung dahingehend weitergebildet, daß Druckluft durch eine Relativbewegung eines Pumpzylinders zu einer an einem Element, gegebenenfalls lösbar, festgelegten Pumpstange generiert ist. Indem weiterhin die Druckluft über eine Relativbewegung von zueinander bewegbaren Teilen, insbesondere eines Pumpzylinders zu einer an einem Element, gegebenenfalls lösbar festgelegten Pumpstange generiert ist, gelingt es, durch Bewegen von in dem Fahrradrahmen integrierten Teilen der Vorrichtung zum Generieren und/oder zur Speicherung von Druckluft den Fahrradreifen zu jeder Zeit und an einem beliebigen Ort zu befüllen, wobei gleichzeitig sichergestellt ist, daß die Teile der Vorrichtung zum Generieren und/oder zur Speicherung von Druckluft unverlierbar und im wesentlichen von Außen nicht erkennbar in dem Element, insbesondere dem Fahrradrahmen angeordnet sind.

Um sicherzustellen, daß die Vorrichtung zum Generieren und/oder zur Speicherung von Druckluft jederzeit gewartet werden kann und überdies sicherzustellen, daß nicht während des Fahrens ein unbeabsichtigtes Verschieben der einzelnen Pumpteile gegenüber dem Element, insbesondere Rahmenteil des Fahrrads stattfindet, ist erfindungsgemäß der Pumpzylinder mittels eines Endteils an dem Element, insbesondere mit einem eine Verriegelung aufweisenden Halteteil, lösbar festgelegt. Durch eine derartige Festlegung des Pumpzylinders an dem Element bzw. an dem Rahmenteil kann einerseits jederzeit auf dem Pumpzylinder zugegriffen werden und dessen Funktionsfähigkeit überprüft werden, und andererseits wird sichergestellt, daß es nicht zu einer unbeabsichtigten Bewegung des Pumpzylinders aus dem Element heraus bzw. einem Rahmenteil kommt.

Indem die Festlegung mit einem eine Verriegelung aufweisenden Halteteil durchgeführt wird, kann in einfacher Weise durch Lösen der verriegelung das Halteteil von dem Endteil gelöst werden und eine Pumpbewegung des Pumpzylinders in bezug auf die Pumpstange durchgeführt bzw. vorgenommen werden.

Um sicher und zuverlässig einen Fahrzeugreifen mit Luft befüllen zu können, ist erfindungsgemäß der Pumpzylinder mit wenigstens einer als Ventil ausgebildeten Abgabeöffnung für Druckluft. Indem der Pumpzylinder mit wenigstens einer als Ventil ausgebildeten Abgabeöffnung für Druckluft versehen ist, ist es bei der Vorrichtung zum Generieren und/oder zur Speicherung von Druckluft nicht erforderlich, in das Element, insbesondere in ein Rahmenteil eines Fahrrads ein zusätzliches Ventil einzusetzen und somit gegebenenfalls das Rahmenteil insgesamt zu schwächen. Bei der Ausbildung, bei welcher der Pumpzylinder mit einer Abgabeöffnung in Verbindung steht, kann beispielsweise, wie dies einer Weiterbildung der Erfindung entspricht, die mit einem Ventil versehene Abgabeöffnung in dem Endteil ausgebildet sein, so daß gegebenenfalls im Fall von Defekten an dem Ventil bzw. an der Abgabeöffnung durch ledigliches Austauschen des Endteils die Vorrichtung zum Generieren und/oder zur Speicherung von Druckluft leicht und zuverlässig wieder funktionsfähig gemacht werden kann.

Indem der Pumpenzylinder in dem Rahmenteil über ein federbelastetes, Luftdurchtrittsöffnungen aufweisendes Gleitlager geführt ist, gelingt es bei einer Pumpbewegung des Pumpkolbens in dem Element bzw. Rahmenteil einfach und zuverlässig, den für das Aufpumpen von Fahrzeugreifen erforderlichen Druck zu generieren, so daß ein Fahrzeugreifen im Bedarfsfall rasch und zuverlässig mit der erforderlichen Druckluft versehen werden kann.

Indem, wie dies einer Weiterbildung der Erfindung entspricht, die Verriegelung als Rastbolzen ausgebildet ist, kann das Lösen des Endteils von dem Halteteil durch ein einfaches Umlegen des Rastbolzens bzw. Entriegeln des Rastbolzens vorgenommen werden, so daß rasch und zuverlässig die Vorrichtung zum Generieren und/oder zur Speicherung von Druckluft in Betrieb genommen werden kann und der Fahrzeugreifen durch einfaches Pumpen auf den erforderlichen Druck gebracht werden kann.

Indem, wie dies einer bevorzugten Weiterbildung der Erfindung entspricht, die Abgabeöffnung mit einer Lufteinfüll-öffnung eines Reifens verbindbar ist, kann ohne weiteren apparativen Aufwand insbesondere ein Fahrzeugreifen direkt durch die Vorrichtung zum Generieren und/oder zur Speicherung von Druckluft mit Druckluft befüllt werden, wodurch einerseits jederzeit ausreichende Mengen an Druckluft zur Verfügung gestellt werden können, um beispielsweise während der Fahrt entwichene Druckluft aus einem mit Luft befüllbaren Reifen sicher und zuverlässig ergänzen zu können.

Für eine besondere einfache Wartung der Vorrichtung zum Generieren und/oder zur Speicherung von Druckluft ist die Erfindung dahingehend weitergebildet, daß die Pumpstange in einer in dem Element, insbesondere Rahmenteil lösbar festgelegten Kolbenmutter lösbar festgelegt ist. Indem die Pumpstange lösbar in einer in dem Element, insbesondere Rahmenteil lösbar festgelegten Kolbenmutter lösbar festgelegt ist, gelingt es in einfacher weise, durch Entfernen der Kolbenmutter Wartungsarbeiten vorzunehmen und gegebenenfalls schadhafte Teile einfach und zuverlässig auszutauschen.

Gemäß einer Weiterbildung der Erfindung ist die Vorrichtung so ausgebildet, daß das von dem Gleitlager abgewandte Ende des Pumpkolbens das lösbar festgelegte Endteil aufweist und daß in dem Endteil die Abgabeöffnung für Druckluft ausgebildet ist. Durch eine derartige Ausbildung kann neben einer zuverlässigen Pumpleistung der Vorrichtung zum Generieren und/oder zur Speicherung von Druckluft darüber hinaus sichergestellt werden, daß sämtliche Teile der Vorrichtung einfach und zuverlässig im Bedarfsfall gewartet und/oder gesondert ersetzt werden können.

Indem, wie dies einer Weiterbildung der Erfindung entspricht, die Vorrichtung zum Generieren und/oder zur Speicherung von Druckluft dadurch weitergebildet ist, daß das Element von einem insbesondere gedämpft bzw. gefedert gelagerten Gabelteil, Rahmenholm für eine Lenkstange und/oder Rahmenteil zur Lagerung eines Sattels und/oder Sattelrohrs gebildet ist, kann die Vorrichtung zum Generieren und/oder zur Speicherung von Druckluft leicht und zuverlässig von der Ruheposition in die Betriebsposition überführt werden und ohne daß irgendwelche Teile des Fahrrads abgenommen, entfernt oder gegebenenfalls umgeklappt werden müssen, wobei allein durch Bewegen eines Fahrradteils in bezug auf einem anderen, beispielsweise des Sattels, in bezug auf das Sattelrohr, der Längstange in bezug auf den Rahmenholm für eine Lenkstange, die erforderliche Pumpleistung und somit die erforderliche Menge an Druckluft zur Verfügung gestellt werden bzw. leicht und zuverlässig Luftreifen entsprechend befüllt werden können. Um diese einfache und zuverlässige Befüllung ohne Abklappen bzw. Abnehmen von einzelnen Fahrradteilen sicherstellen zu können, ist die Erfindung dahingehend weitergebildet, daß ein Kopfbereich des Gabelteils, die Lenkstange oder der Sattel an dem Endteil gegebenenfalls lösbar festgelegt sind, wodurch lediglich durch Bewegen der Lenkstange bzw. des Sattels in bezug auf die entsprechenden Rahmenteile die erforderliche Generierung von Druckluft durchgeführt werden kann.

Die Erfindung wird nachfolgend anhand von in der beiliegenden Zeichnung schematisch dargestellten Ausführungsbeispielen näher erläutert. In dieser zeigen:
Fig. 1 eine Ansicht eines Fahrradsattels gemäß dem Stand der Technik sowie des zugehörigen Rahmenteils, in welchem dieser gelagert ist, wobei der Rahmenteil als Druckspeicherbehälter ausgebildet ist;
Fig. 2 eine Ansicht einer Fahrradgabel gemäß dem Stand der Technik von vorne, teilweise im Schnitt, wobei die Gabel als Druckbehälter zur Speicherung von Druckluft ausgebildet ist;
Fig. 3 eine Ansicht eines Lenkers gemäß dem Stand der Technik samt zugehörigem Rahmenteil und Gabel eines Fahrrads, wobei im Bereich des Lenkers ein Druckbehälter zur Speicherung von Druckluft ausgebildet ist;
Fig. 4 eine Ansicht eines Fahrradsattels sowie der zugehörigen Sattelstütze, in welcher die Vorrichtung zum Generieren und/oder zur Speicherung von Druckluft gemäß der Erfindung integriert ist;
Fig. 5 eine Ansicht des Fahrradsattels nach Fig. 4, bei welcher die Vorrichtung zum Generieren und/oder zur Speicherung von Druckluft gemäß der Erfindung sich in der Betriebsposition befindet;
Fig. 6 eine Ansicht eines Fahrradlenkers sowie den zugehörigen Rahmenholm für die Lenkstange, in welchem die Vorrichtung zum Generieren und/oder zur Erzeugung von Druckluft gemäß der Erfindung integriert ist, in Ruheposition; und
Fig. 7 eine Ansicht einer Fahrradgabel, in welcher in jede der zwei Gabelelemente jeweils eine Vorrichtung zum Generieren und/oder zur Speicherung von Druckluft gemäß der Erfindung integriert ist, in Betriebspositionen.

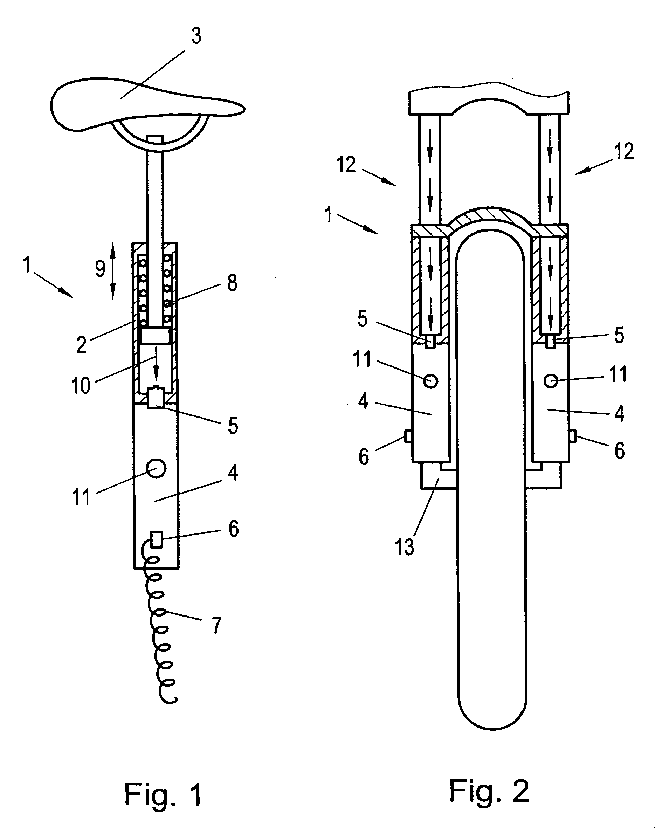

In Fig. 1, welche von der vorliegenden Erfindung nicht umfaßt ist, ist allgemein der Rahmen eines Fahrrads mit 1 bezeichnet, wobei im Fall der Fig. 1 jener Rahmenteil 2 dargestellt ist, in welchem ein Fahrradsattel 3 federnd gelagert ist. Im Inneren des Rahmenteils 2 ist ein Teil des Rahmenteils 2 als Druckluftbehälter 4 ausgebildet, wobei der Druckluftbehälter 4 einerseits ein Ventil 5 zum Befüllen des Druckluftbehälters mit Druckluft aufweist und andererseits eine Abgabeöffnung 6 aufweist, welche als Einwegventil ausgebildet ist, an welche Abgabeöffnung 6 ein schematisch dargestellter Schlauch 7 anschließbar ist, mit welchem ein nicht dargestellter Fahrradreifen mit Luft befüllt werden kann.

Zur Befüllung des Druckluftbehälters 4 ist der Sattel 3 im oberen Bereich des Rahmenteils 2 federnd, wie dies schematisch mit 8 dargestellt ist, gelagert, wobei durch die federnde Auf- und Abbewegung des Sattels 3, welche schematisch mit dem Pfeil 9 angedeutet ist, im Rahmenteil 2 insbesondere bei der Bewegung in Richtung des Pfeils 10 ein Überdruck im Rahmenteil 2 entsteht, welcher über das Einwegventil 5 in den Druckspeicherbehälter 4 eingespeist bzw. abgegeben wird.

Zur Sicherstellung, daß in dem Druckbehälter 4 kein Überdruck bzw. kein über einen bestimmten Grenzwert hinausgehender Druck aufgebaut wird, ist der Druckbehälter 4 mit einem schematisch dargestellten Überdruckventil 11 ausgebildet, über welches Überdruckventil 11 überschüssige Druckluft sicher und zuverlässig abgelassen werden kann.

Bei der Darstellung gemäß Fig. 2 ist eine analoge Speichereinrichtung für Druckluft in einem Gabelteil zur Halterung von insbesondere dem Vorderrad eines Fahrzeugs dargestellt. Hiebei ist der Rahmen wiederum schematisch mit 1 bezeichnet und die beiden Holme der Gabel sind schematisch mit 12 bezeichnet. Das Innere der Gabelteile 12 ist insbesondere in dem unteren, zur Fahrradnabe 13 gerichteten Endbereich als Druckluftbehälter 4 ausgebildet. Zum Befüllen des Druckluftbehälters 4 ist wiederum ein Ventil 5 zum Befüllen dargestellt, wobei ebenso wie in der Darstellung von Fig. 1 eine Abgabeöffnung 6 in dem Druckluftbehälter 4 schematisch angedeutet ist.

Das Befüllen des Druckluftbehälters 4 erfolgt wiederum über die gefederte Lagerung der Gabel 12 im Rahmen 1 des Fahrrads, so daß während des Fahrens Druckluft in den Druckluftbehälter 4 eingespeist werden kann. Zur Sicherstellung, daß überschüssige Druckluft zuverlässig abgelassen werden kann, ist in jedem der Druckluftbehälter 4 wiederum ein schematisch mit 11 bezeichnetes Überdruckventil vorgesehen.

Zur Darstellung gemäß Fig. 2 ist auszuführen, daß diese Vorrichtung exakt umgekehrt ebenfalls in der Gabel vorgesehen werden kann, in welchem Fall der Druckluftbehälter 4 im oberen Bereich der Gabel ausgebildet wäre und entsprechende Abgabeöffnungen ebenfalls in einem oberen Bereich der Gabel angeordnet wären.

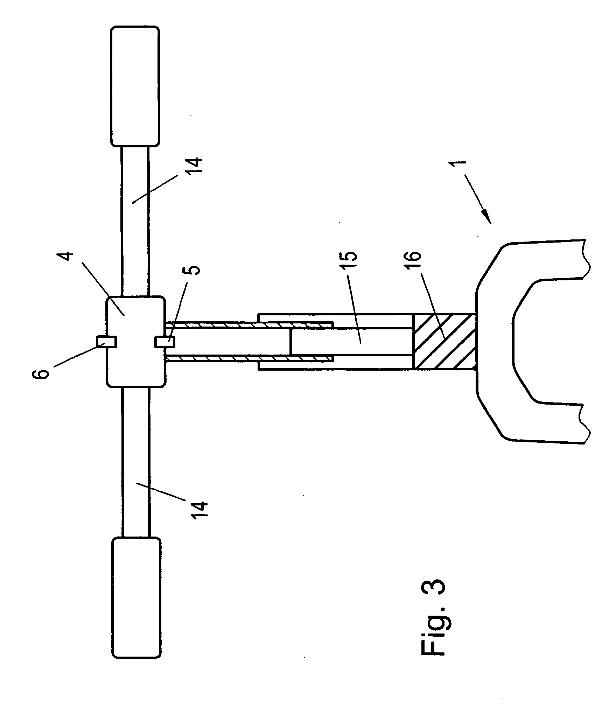

Schließlich ist bei der Darstellung gemäß Fig. 3 ebenfalls wieder ein Rahmenteil eines Fahrrads allgemein mit 1 bezeichnet, wobei im vorliegenden Fall der Druckluftbehälter 4 im Bereich der Lenkstange 14 des Fahrrads vorgesehen ist. Das Befüllen des Druckluftbehälters 4 erfolgt wiederum über ein Einwegventil 5 zum Befüllen des Druckluftbehälters und die Abgabe von Druckluft über eine Auslaßöffnung 6, welche im vorliegenden Fall im oberen Bereich der Lenkstange vorgesehen ist. Um eine sichere Lagerung insbesondere jenes Teils des Fahrradrahmens 1 zu gewährleisten, welcher als Kolben 15 zum Befüllen des Druckluftbehälter 4 dient, ist der Kolben 15 bei der Darstellung gemäß Fig. 3 auf einem dichtenden Element, beispielsweise einem Gummiteil 16, gelagert.

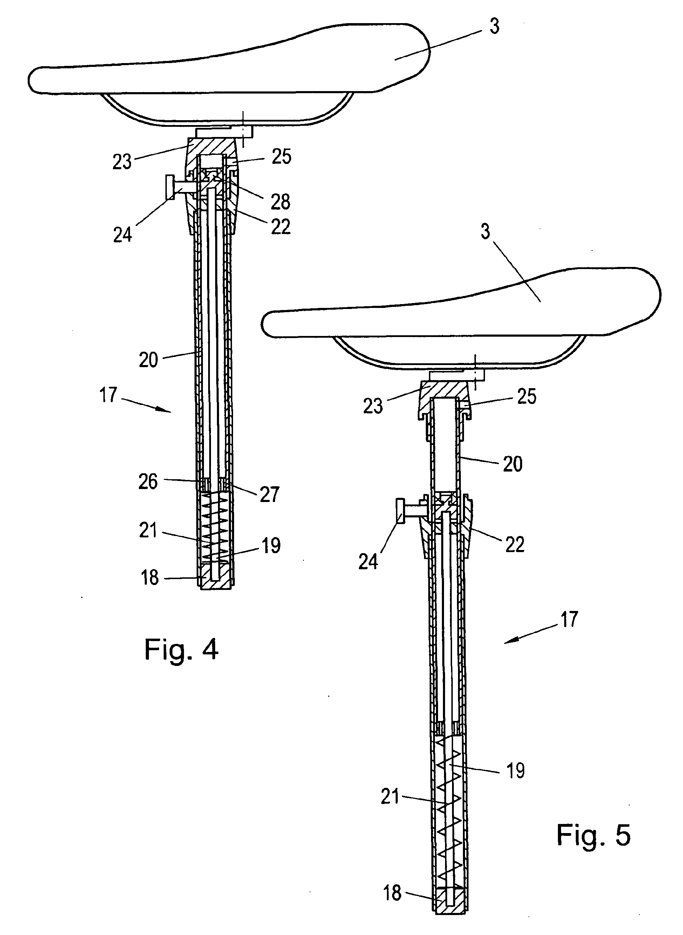

In Fig. 4 ist eine Vorrichtung zum Generieren und/oder zur Speicherung von Druckluft in Übereinstimmung mit der vorliegenden Erfindung dargestellt, in welcher die Vorrichtung zum Generieren für Druckluft in einer Stütze 17 für einen Fahrradsattel 3 bzw. Sattelstütze 17 integriert ist. Der untere Endbereich der Sattelstütze 17 ist hiebei mit einer lösbar festgelegten Kolbenmutter 18 versehen, wobei die Kolbenmutter 18 im vorliegenden Fall in die Sattelstütze 17 eingeschraubt ist. Im Inneren der Kolbenmutter 18 ist wiederum lösbar, insbesondere durch Verschraubung der Pumpkolben 19 der Vorrichtung zum Generieren von Druckluft lösbar festgelegt.

Die Vorrichtung zum Generieren und/oder zur Speicherung von Druckluft weist darüber hinaus einen Pumpkolben 20 auf, welcher im Inneren des Sattelrohrs 17 zu einer hin- und hergehenden Bewegung geführt ist. Um sicherzustellen, daß die Pumpstange 20 nicht unbeabsichtigt aus dem Sattelrohr 17 herausgezogen wird bzw. die weiters in dem Sattelrohr 17 aufgenommenen Federelemente 21 unbeabsichtigt austreten, ist im oberen Endbereich des Sattelrohrs 17 ein Haltteil 22 insbesondere lösbar festgelegt bzw. auf das Sattelrohr 17 aufgeschraubt. Das Halteteil 22 wirkt hiebei mit einem Endteil 23 zusammen, um insbesondere eine Ruheposition, in welcher die Pumpstange in bezug auf die Sattelstütze 17 unbeweglich festgelegt ist, sowie eine Arbeitsposition, in welcher der Pumpkolben 20 in bezug auf das Sattelrohr 17 zu einer Hin- und Herbewegung geführt werden kann, sicherzustellen.

Um eine derartige lösbare Festlegung des Endteils 23 in bezug auf das Halteteil 22 zur Verfügung zu stellen, ist das Halteteil 22 hiebei mit einer Verriegelung 24, welche insbesondere als Rastbolzen 24 ausgebildet ist, versehen.

Schließlich weist das Endteil 23 eine insbesondere mit einem Ventil versehene Abgabeöffnung 25 für Druckluft auf, wobei das Ventil in der dargestellten Ausbildung weggelassen ist. Über die Abgabeöffnung 25 und insbesondere im Bereich des Ventils ist beispielsweise ein Luftschlauch anlenkbar, welcher beispielsweise mit einem Reifen, der mit Druckluft zu befüllen ist, verbindbar ist.

Diese Elemente, welche an sich bekannt sind, sind in Fig. 4 nicht dargestellt.

Schließlich weist die Vorrichtung zum Generieren von Druckluft im Inneren der Pumpstange, insbesondere an seinem von dem Endteil abgewandten Ende ein Gleitlager 26 auf, welches Gleitlager 26 mit Lufteinlässen bzw. Luftdurchlässen 27 versehen ist.

Schließlich ist im Inneren des Druckkolbens 20 ein zu einer hin- und hergehenden Bewegung gelagertes Kunststoffteil 28 vorgesehen, welches Kunststoffteil 28 als Anschlagelement für den Pumpkolben 19 dient und welches Anschlagteil 28 derart geführt und gelagert ist, daß es einen Luftdurchtritt nicht behindert.

In Fig. 5, welche der Darstellung von Fig. 5 entspricht, ist die Vorrichtung zum Generieren von Druckluft in ihrer Betriebsposition, d.h. in jener Position dargestellt, in welcher Druckluft für das Befüllen von beispielsweise Fahrzeugreifen mit Luft generiert werden können.

In der Darstellung gemäß Fig. 5 ist der Rastbolzen 24 gelöst, so daß das Endteil 23 von dem Halteteil 22 gelöst werden kann und eine Pumpbewegung des Pumpkolbens 20 ausgeführt werden kann. Bei dieser Pumpbewegung wird durch die Sattelstütze 17 Luft in das Innere der Sattelstütze 17 eingesaugt, die Luft weiters bei einer Bewegung der Pumpstange 20 entgegen der Kraft der Feder 21 durch das Gleitlager 26 mit Lufteinlässen 27 in das Innere des Pumpkolbens 20 gedrückt und in der Folge durch die Abgabeöffnung für Druckluft 25 bzw. das darin vorgesehene Ventil abgegeben.

Wenn das Fahrrad in der Folge wieder zum Fahren und nicht zum Generieren von Druckluft verwendet werden soll, genügt es, das Endteil 23 in das Halteteil 22 einzusetzen und den Rastbolzen 24 zu verriegeln, worauf die Vorrichtung zum Generieren von Druckluft wiederum in ihrer Ruheposition verriegelt ist.

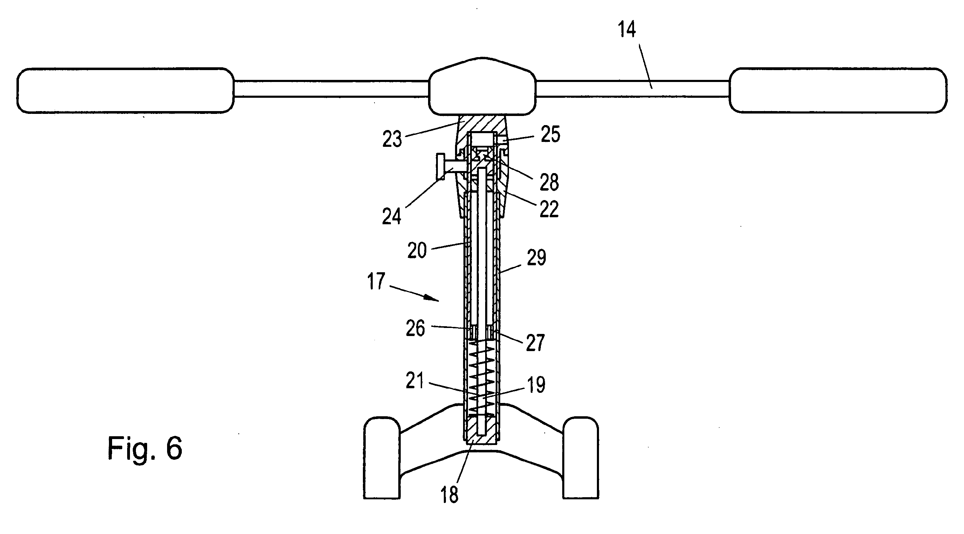

In Fig. 6 ist eine analoge Darstellung einer Vorrichtung zum Generieren von Druckluft gezeigt, in welcher die Vorrichtung in einem Rahmenholm für eine Längsstange 29 aufgenommen ist. Die Lenkstange ist hiebei schematisch mit 14 angedeutet.

Bei der Darstellung gemäß Fig. 6 ist die Vorrichtung zum Generieren von Druckluft in ihrer Ruheposition dargestellt, wobei bei dieser Darstellung die Kolbenmutter 18 beispielsweise in dem dichtenden Element 16, wie es in Fig. 3 dargestellt ist, integriert sein kann.

Sämtlichen weiteren Teile der Vorrichtung zum Generieren von Druckluft sind in der Darstellung gemäß Fig. 6 ident zu jener zu Fig. 4, so daß sie nicht näher beschrieben werden müssen.

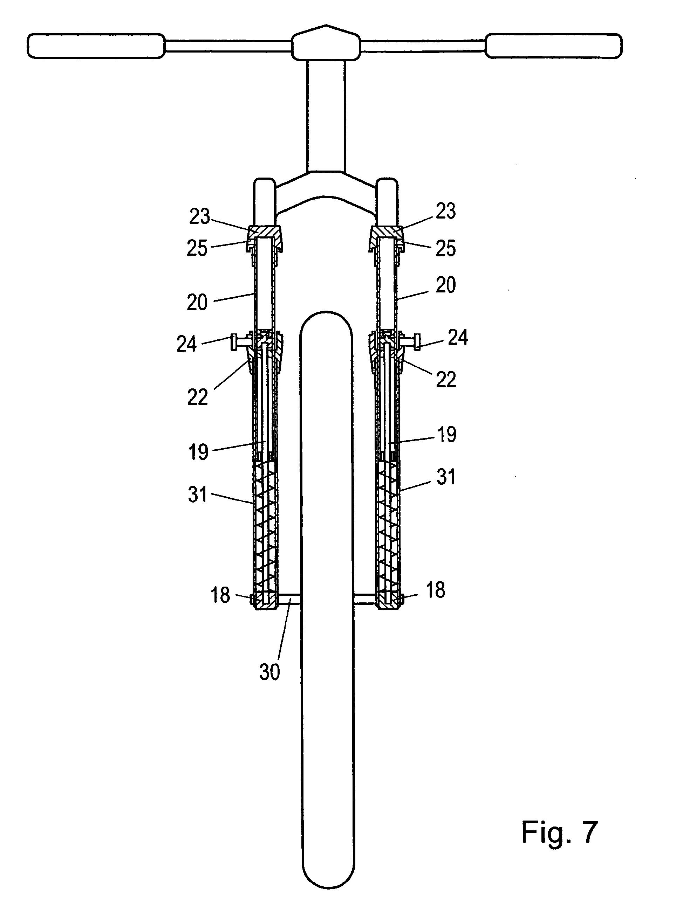

Schließlich zeigt die Darstellung gemäß Fig. 7 eine Ausbildung der Vorrichtung zum Generieren von Druckluft, in welcher die Vorrichtung in den Gabelelementen 31 eines Fahrzeugrahmens 1 aufgenommen ist. Bei dieser Darstellung ist die Vorrichtung zur Generierung von Druckluft zweifach je einmal in jedem Gabelelement 31 ausgebildet, so daß es beispielsweise gelingen kann, durch ein und dieselbe Pumpbewegung beide Reifen eines Fahrrads zu befüllen.

Mit Rücksicht auf die Tatsache, daß auch die Ausbildung gemäß Fig. 7 analog der, wie sie in Fig. 4 beschrieben ist, ist mit der einzigen Ausnahme, daß die Vorrichtung gemäß Fig. 7 analog zur Darstellung von Fig. 5 in der Betriebsposition dargestellt ist, erübrigt es sich, die einzelnen Elemente besonders zu beschreiben.

Lediglich die Festlegung der Vorrichtung zum Generieren von Druckluft ist in der Darstellung gemäß Fig. 7 abweichend von jener der Fig. 3 bzw. Fig. 6, da die Kolbenmutter 18 so ausgebildet ist, daß sie einerseits die in Fig. 4 beschriebene Funktion erfüllt und andererseits gleichzeitig durch die Radachse bzw. Nabe 30 durchstoßen ist, so daß für das Lösen der Kolbenmutter 18 erst die schematisch dargestellte Radachse 30 entfernt werden muß, worauf in weiterer Folge die Kolbenmutter 18, wie in Fig. 4 beschrieben, gelöst werden kann.

## Patentansprüche

1. Vorrichtung zum Generieren und/oder zur Speicherung von Druckluft, zum Befüllen von Reifen eines Fahrzeugs, insbesondere Fahrrads (1) wobei die Vorrichtung in einem Element (12, 17, 29, 31), bzw. Rahmenelement (2) des Fahrzeugs aufgenommen ist und daß ein Pumpzylinder (20) mit wenigstens einer als Ventil (5) ausgebildeten Abgabeöffnung (25) für Druckluft versehen ist, **dadurch gekennzeichnet daß** Druckluft durch eine Relativbewegung des Pumpzylinders (20) zu einer an einem Element (12, 17, 29, 31) festgelegten Pumpstange (19) generiert wird, daß der Pumpzylinder (20) mittels eines Endteils (23) an dem Element (12, 17, 29, 31), mit einem eine Verriegelung (24) aufweisenden Halteteil (22), lösbar festgelegt ist, und daß der Pumpzylinder (20) in dem Rahmenteil (2) über ein federbelastetes Luftdurchtrittsöffnungen (27) aufweisendes Gleitlager (26) geführt ist.

2. Vorrichtung nach Anspruch 1, **dadurch gekennzeichnet, daß** die Verrieglung als Rastbolzen (24) ausgebildet ist.

3. Vorrichtung nach Anspruch 1 oder 2, **dadurch gekennzeichnet, daß** die Abgabeöffnung (25) mit einer Lufteinfüll-öffnung eines Reifens verbindbar ist.

4. Vorrichtung nach Anspruch 1, 2 oder 3, **dadurch gekennzeichnet, daß** die Pumpstange (19) in einer in dem Element (12, 17, 29, 31), oder dem Rahmenteil (2) lösbar festgelegten Kolbenmutter (18) lösbar festgelegt ist.

5. Vorrichtung nach einem der Ansprüche 1 bis 4, **dadurch gekennzeichnet, daß** der von dem Gleitlager (24) abgewandte Endteil des Pumpzylinders (19) das lösbar festgelegte Endteil (23) aufweist und daß in dem Endteil (23) die Abgabeöffnung für Druckluft ausgebildet ist.

6. Vorrichtung nach einem der Ansprüche 1 bis 5, **dadurch gekennzeichnet, daß** das Element von einem gedämpft bzw. gefedert gelagerten Gabelteil (12), Rahmenholm (29) für eine Lenkstange (14), Rahmenteil (2) zur Lagerung eines Sattels (3) und/oder Sattelrohrs bzw. Sattelstütze (17) gebildet ist.

7. Vorrichtung nach einem der Ansprüche 1 bis 6, **dadurch gekennzeichnet, daß** ein Kopfbereich des Gabelteils, die Lenkstange (14) oder der Sattel (3) an dem Endteil gegebenenfalls lösbar festgelegt sind.

## Claims

1. A device for generating and/or storing compressed air for filling tires of a vehicle, in particular bicycle (1), wherein the device is received in an element (12, 17, 29, 31), or frame element (2), of the vehicle and that a pump cylinder (20) is provided with at least one compressed air discharge opening (25) configured as a valve (5), **characterized in that** compressed air is generated by a relative movement of a pump cylinder (20) relative to a pump rod (19) fixed to an element (12, 17, 29, 31), that the pump cylinder (20), via an end portion (23), is detachably fastened to the element (12, 17, 29, 31) by the aid of a retention part (22) including a lock (24), and that the pump cylinder (20) is guided within the frame part (2) via a spring-loaded slide bearing (26) including air passage openings (27).

2. A device according to claim 1, **characterized in that** the lock is designed as a latch pin (24).

3. A device according to claim 1 or 2, **characterized in that** the discharge opening (25) is connectable with an air filling opening of a tire.

4. A device according to claim 1, 2 or 3, **characterized in that** the pump rod (19) is detachably fixed in a piston nut (18) detachably fixed in the element (12, 17, 29, 31), or the frame part (2).

5. A device according to any one of claims 1 to 4, **characterized in that** the pump piston end portion facing away from the slide bearing (24) comprises the detachably fixed end portion (23), and that the discharge opening for compressed air is formed in said end portion (23).

6. A device according to any one of claims 1 to 5, **characterized in that** the element is formed by a cushion-mounted or resiliently mounted fork part (12), frame spar (29) for a handlebar (14) and/or frame part (2) for mounting a saddle (3) and/or a saddle tube or saddle post (17).

7. A device according to any one of claims 1 to 6, **characterized in that** a head portion of the fork part, the handlebar (14) or the saddle (3) is, optionally detachably, fixed to the end portion.

## Revendications

1. Dispositif pour générer et/ou stocker de l'air comprimé, pour le remplissage de pneus d'un véhicule, en particulier d'une bicyclette (1), le dispositif étant reçu dans un élément (12, 17, 29, 31) ou élément de cadre (2) du véhicule, et un cylindre de pompe (20) est pourvu d'au moins une ouverture d'échappement (25) agencée en soupape (5) pour l'air comprimé, **caractérisé en ce que** de l'air comprimé est généré par un mouvement relatif du cylindre de pompe (20) par rapport à une tige de pompe (19) fixée à un élément (12, 17, 29, 31), que le cylindre de pompe (20) est fixé de manière amovible au moyen d'une pièce d'extrémité (23) à l'élément (12, 17, 29, 31), avec une pièce de retenue (22) présentant un verrouillage (24) et que le cylindre de pompe (20) est guidé dans l'élément de cadre (2) par un palier lisse (26) sollicité par ressort présentant des ouvertures de passage d'air (27).

2. Dispositif selon la revendication 1, **caractérisé en ce que** le verrouillage est agencé en boulon d'arrêt (24).

3. Dispositif selon la revendication 1 ou 2, **caractérisé en ce que** l'ouverture d'échappement (25) peut être reliée à une ouverture de remplissage d'air d'un pneu.

4. Dispositif selon la revendication 1, 2 ou 3, **caractérisé en ce que** la tige de pompe (19) est fixée de manière amovible dans un écrou de piston (18) fixé de manière amovible dans l'élément (12, 17, 29, 31) ou la pièce de cadre (2).

5. Dispositif selon l'une des revendications 1 à 4, **caractérisé en ce que** la partie d'extrémité du cylindre de pompe (19) éloignée du palier lisse (24) présente la pièce d'extrémité (23) fixée de manière amovible et que l'ouverture de sortie pour l'air comprimé est agencée dans la pièce d'extrémité (23).

6. Dispositif selon l'une des revendications 1 à 5, **caractérisé en ce que** l'élément est formé d'une partie de fourche (12), d'un montant de cadre (29) pour une tige de direction (14), d'une partie de cadre (2) pour le support d'une selle (3) et/ou d'une potence ou d'un tube porte-selle (17) supportée de manière amortie ou sur ressorts.

7. Dispositif selon l'une des revendications 1 à 6, **caractérisé en ce qu'**une zone de tête de la pièce de fourche, la tige de direction (14) ou la selle (3) est fixée le cas échéant de manière amovible à la pièce d'extrémité.
